(19) Europäisches Patentamt
European Patent Office
Office européen des brevets

(11) **EP 1 337 048 A2**

(12) **EUROPEAN PATENT APPLICATION**

(43) Date of publication:
**20.08.2003 Bulletin 2003/34**

(51) Int Cl.7: **H04B 1/16**, H04B 1/40

(21) Application number: **02023917.4**

(22) Date of filing: **24.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **14.02.2002 JP 2002036793**

(71) Applicant: **MITSUBISHI DENKI KABUSHIKI
KAISHA
Tokyo 100-8310 (JP)**

(72) Inventor: **Sako, Takumi
Chiyoda-ku, Tokyo 100-8310 (JP)**

(74) Representative: **Sajda, Wolf E., Dipl.-Phys. et al
MEISSNER, BOLTE & PARTNER
Widenmayerstrasse 48
80538 München (DE)**

(54) **Mobile transceiver and control method for a mobile transceiver**

(57) It is an object to provide a communication control method of further reducing power consumption of a mobile communication machine. A DSP of a base band control portion (1) receives a threshold of a receiving level for starting a CPU of a sequence control portion (4) by serving cell information and an interruption from the CPU (S11). In a waiting state, the DSP starts a measurement of a receiving level of CPICH of the serving cell for each DRX cycle (a discontinuous receive cycle) upon receipt of PICH and the CPICH in a base station (S12). At a step S13, then, receiving levels of RSSI, RSCP and Ec / Io which are acquired are compared with a threshold set based on 3GPP standards given from the CPU, thereby deciding quality of the receiving levels. If the receiving level is reduced, the DSP generates an interruption for the CPU (S14).

F I G . 1

100

EP 1 337 048 A2

**Description**

BACKGROUND OF THE INVENTION

Field of the Invention

The present invention relates to a method of controlling a communication of a mobile communication machine to be used for a W - CDMA (Wideband Code Division Multiple Access) mobile communication, and more particularly to a communication control method to be carried out during a discontinuous receipt.

Description of the Background Art

A mobile communication machine to be used for a mobile communication always needs to monitor a call for a self- machine in a state in which a power supply is ON and talking is not performed (a waiting state). The monitoring operation is carried out by discontinuously receiving a paging indication channel (PICH) of any base station to check contents (a discontinuous receipt processing).
A base station for transmitting the PICH received by the self- machine will be referred to as a serving cell and base stations other than the serving cell will be referred to as adjacent cells.
Moreover, a common pilot channel (CPICH) of the base station is received simultaneously with the receipt of the PICH and a receiving level is measured, and the necessity of a waiting zone transition is decided for the measured receiving level by an equation set based on 3GPP (3rd Generation Partnership Project) standards.
The waiting zone implies a radio coverage area of the serving cell, and the waiting zone transition implies that a mobile communication machine is moved to enter a radio coverage area of another base station (a second base station) from a radio coverage area of a certain base station (a first base station) so that the waiting zone for the mobile communication machine is changed.
For example, in the case in which the first base station is set to be the serving cell, the mobile communication machine needs to periodically monitor the receiving levels of the second base station (adjacent cells) and the other cells in addition to the serving cell. If the monitoring operation is not carried out, it is impossible to know whether or not the mobile communication machine gets away from a waiting zone of a certain serving cell and enters a waiting zone of another cell.
In the case in which the receiving level of the first base station is lower than a predetermined value, it is decided that the waiting zone is changed. Consequently, the PICH receipt from the first base station is ended and the PICH receipt of the second base station is started.
The measurement of the receiving level will be described. The CPICH to be used for measuring the receiving level is a channel which is always transmitted from the base station for the pilot synchronization (timing) of the mobile communication machine and is a signal for informing each mobile communication machine of the presence of the base station itself. While the CPICH does not include data having meaning as data of a layer 3, it is possible to measure a received signal strength indicator (RSSI), a received signal code power (RSCP) and a ratio of a desired wave power to a total received power (Ec / Io). The Ec / Io can be obtained by an operation of the RSCP - RSSI.
As described above, in the case in which the receiving level of the CPICH of the serving cell is lower than a predetermined value in the mobile communication, for example, the case in which the mobile communication machine is present in a peripheral portion of the waiting zone of a certain serving cell, the mobile communication machine needs to measure the receiving level of adjacent cells in order to search for a new serving cell. In the case in which the receiving level of the CPICH of the serving cell is equal to or more than a predetermined value, it can be decided that the mobile communication machine is reliably present in the waiting zone of the serving cell. Therefore, the measurement of the receiving level of the adjacent cells (which will be hereinafter referred to as an adjacent-cells monitoring) is stopped based on the 3GPP standards and only the receiving level of the serving cell is measured discontinuously, thereby causing an operation of a CPU (Central Processing Unit) to sleep to reduce power consumption (a power saving mode).
A power saving mode of a conventional mobile communication machine will further be described below.
The mobile communication machine has at least a radio portion for receiving and transmitting a communication wave, a base band portion for carrying out a timing synchronization and a dispreading processing for the data received by the radio portion, and a sequence control portion for carrying out sequence control of the base band portion.
When the mobile communication machine enters a waiting zone of a new serving cell, the CPU of the sequence control portion reports information about the serving cell (a spreading code of each channel, a timing) to a DSP (Digital Signal Processor) constituted by firmware of the base band portion. The information about the serving cell is previously acquired by a cell search processing before a waiting zone transition is carried out.
This operation is executed only once when the mobile communication machine enters the waiting zone of the new serving cell. If the receiving level of the CPICH of the serving cell is equal to or more than a predetermined value (a Sintrasearch threshold), there is set a power saving mode in which the receiving level of the adjacent cells is stopped to be monitored and only the receiving level of the serving cell is measured in a timing of a discontinuous receipt processing.

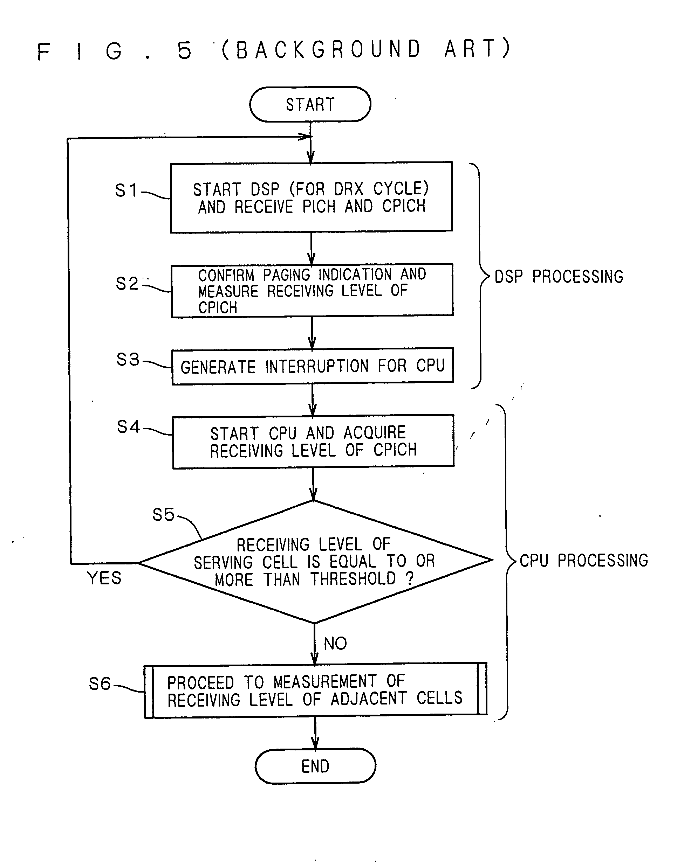

With reference to a flow chart shown in Fig. 5, description will be given to a conventional power saving mode in a waiting state.

While the mobile communication machine discontinuously receives the PICH (Paging Indication CHannel) of the base station in the waiting state as described above, the receiving cycle will be referred to as a discontinuous receive (DRX) cycle.

Accordingly, the mobile communication machine starts the DSP of the base band portion for each DRX cycle, thereby receiving the PICH and CPICH of the serving cell as shown in Fig. 5 (Step S1).

In the DSP, then, the paging indication of the PICH is confirmed and the receiving level of the CPICH is started to be measured (Step S2).

The DSP first measures the RSSI of a received wave by using hardware of the radio portion and the base band portion, and then despreads the received wave and measures the RSCP (received signal code power) by using a scrambling code and timing information which are previously given from the CPU.

Next, the DSP generates an interruption for the CPU (Step S3).

Upon receipt of the interruption, the CPU is started to receive information about the RSSI and RSCP which are measured by the DSP, and calculates Ec / Io (a ratio of a desired wave power to a total received power) based on these information (Step S4).

As shown in Step S5, then, an acquired receiving level (any of values of RSSI, RSCP and Ec /Io) is compared with a preset threshold (Sintrasearch threshold). If the receiving level is equal to or higher than the threshold, it is decided that the receiving level is excellent and the operations in and after the Step S1 are repeated. On the other hand, if the receiving level is lower than the threshold, it is decided that the receiving level is reduced and an adjacent-cells monitoring is started (Step S6).

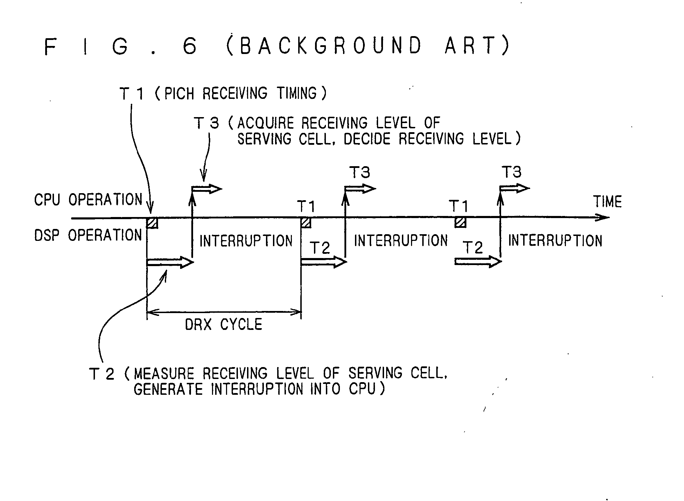

Fig. 6 is an image diagram showing a series of operations described above. As shown in Fig. 6, a timing in which the DSP receives the PICH of the serving cell comes every DRX cycle. A receiving period is represented by T1. In the DSP, the CPICH is also received at the same time and the receiving level is measured as described above. A period to be taken for such a work is represented by T2. Then, the DSP carries out an interruption for the CPU. The CPU is started to decide whether or not the adjacent-cells monitoring is to be carried out based on the receiving level of the serving cell. If necessary, the adjacent-cells monitoring is carried out. The operation period (starting period) of the CPU is represented by T3.

As described above, the receiving level of the serving ,cell and that of the adjacent cells have conventionally been measured by the cooperation of the DSP of the base band portion and the CPU of the sequence control portion.

A mean current $I_{CPU}$ of the CPU can be expressed in the following equation, wherein a DRX cycle is set to 2.56 seconds, a starting period T3 of the CPU is set to 30 msec and a consumed current of the CPU is set to 40 mA.

$$I_{CPU} = 30/2560 \text{ (CPU operating ratio)} \times 40 \text{ mA} = 0.46875 \text{ mA}$$

The value is equivalent to approximately 5 % if a mean consumed current of the whole mobile communication machine is set to 10 mA.

In the waiting state, thus, the mobile communication machine discontinuously receives the PICH of the base station, thereby reducing the power consumption. In spite thereof, a power of approximately 5 % is consumed. Consequently, a reduction in the power consumption is further required.

SUMMARY OF THE INVENTION

It is an object of the present invention to provide a communication control method of further reducing power consumption in a mobile communication machine to be used for a mobile communication.

According to a first aspect of the present invention, a method of controlling a communication of a mobile communication machine including a sequence control portion and a base band control portion has the following steps (a) and (b). More specifically, the step (a) carries out a discontinuous receipt processing for discontinuously confirming a call to a self - machine in a waiting state in which a power supply is ON and a communication is riot performed and the discontinuous receipt processing measures a receiving level of a common pilot channel transmitted by a serving cell in the base band control portion and decides quality of the receiving level based on a predetermined threshold. The step (b) starts the sequence control portion to carry out a predetermined operation only when it is decided that the receiving level is insufficient in the step (a).

A receiving level of a common pilot channel transmitted by a serving cell is measured in the base band control portion of the mobile communication machine and quality of the receiving level is decided based on a predetermined threshold, and the sequence control portion is started only when it is decided that the receiving level is insufficient. Therefore, the number of starting operations of the sequence control portion is reduced in a discontinuous receipt processing so that the power consumption of the mobile communication machine can be reduced.

According to a second aspect of the present invention, a method of controlling a communication of a mobile communication machine including a sequence control portion and a base band control portion serves to carry out a receiving level quality decision processing in a discontinuous receiving state for discontinuously confirming a call to a self - machine, and the quality decision processing includes first and second steps. More specifically, the first step causes the sequence control portion to set a predetermined threshold related to the receiving level and stops an operation by itself. The second step causes the base band control portion to measure the receiving level and decides quality of the receiving level thus measured based on the predetermined threshold. The third step causes the sequence control portion to be operated, thereby deciding the quality of the receiving level only when it is decided that the receiving level is insufficient in the second step.

At the second step, the sequence control portion is operated only when it is decided that the receiving level is insufficient. Therefore, the number of starting operations of the sequence control portion is decreased in the discontinuous receiving state so that the power consumption of the mobile communication machine can be reduced.

According to a third aspect of the present invention, a mobile communication machine including a sequence control portion and a base band control portion employs the control method according to the first aspect of the present invention or the control method according to the second aspect of the present invention.

The number of the starting operations of the sequence control portion is decreased so that the power consumption can be reduced.

These and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing a structure of a mobile communication machine according to an embodiment of the present invention,
Figs. 2 and 3 are flow charts for explaining a communication control method according to the embodiment of the present invention,
Fig. 4 is an image diagram for explaining the communication control method according to the embodiment of the present invention,
Fig. 5 is a flow chart for explaining a communication control method of a conventional mobile communication machine, and
Fig. 6 is an image diagram for explaining the communication control method of the conventional mobile communication machine.

DESCRIPTION OF THE PREFERRED EMBODIMENTS

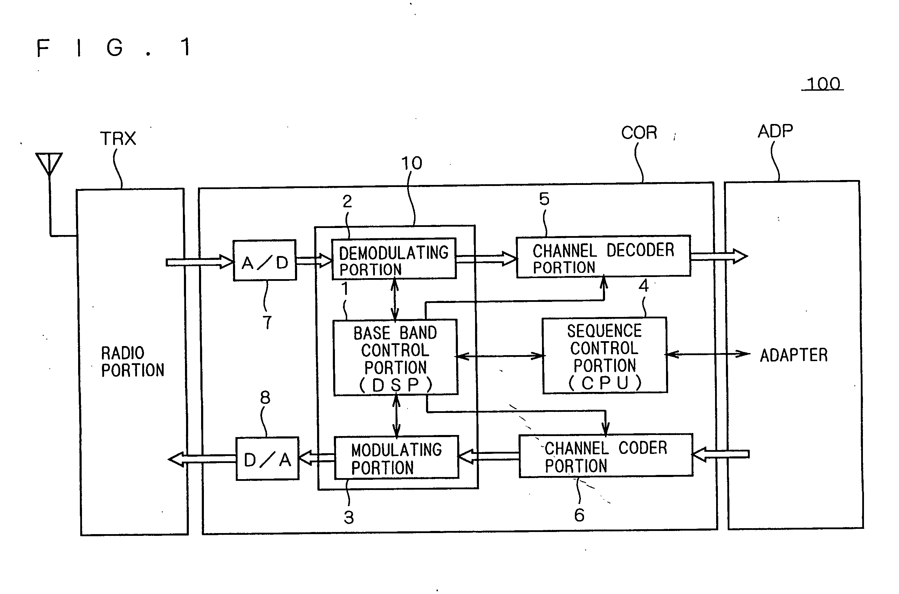

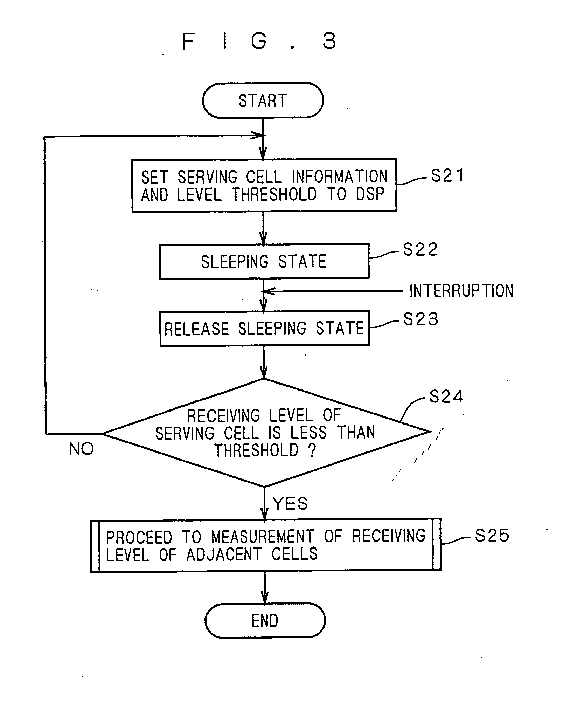

An embodiment of a method of controlling a communication of a mobile communication machine according to the present invention will be described below with reference to Figs. 1 to 4.

<A. Structure of Device>

Fig. 1 is a block diagram showing a schematic structure of a mobile communication machine 100 to be used for a mobile communication.

As shown in Fig. 1, the mobile communication machine 100 comprises a radio portion TRX for receiving and transmitting an analog signal based on W - CDMA (Wideband Code Division Multiple Access) standards, a core portion COR for processing received data and transmitted data, and an adapter ADP having peripheral equipment including a user interface.

The core portion COR includes a base band portion 10, a sequence control portion 4 for carrying out sequence control of the base band portion 10, a channel decoder portion 5, a channel coder portion 6, an A /D converting portion 7 for converting analog data received by the radio portion TRX into digital data, and a D /A converting portion 8 for converting digital data into analog data and giving the analog data to the radio portion TRX.

The base band portion 10 includes a base band control portion 1, a demodulating portion 2 for carrying out a de-spreading processing over the digital data given from the A / D converting portion 7, and a modulating portion 3 for carrying out a spreading processing over the data to be given to the D / A converting portion 8. Moreover, the base band control portion 1 has a DSP (Digital Signal Processor) constituted by firmware and serves to control the demodulating portion 2 and the modulating portion 3 and to control the channel decoder portion 5 and the channel coder portion 6.

The channel decoder portion 5 has a function of decoding the digital data demodulated by the demodulating portion 2 and giving the digital data thus decoded to the adapter ADP, and the channel coder portion 6 has a function of coding the digital data given from the adapter ADP and giving the digital data thus coded to the modulating portion 3.

The sequence control portion 4 has a CPU (Central Processing Unit) and serves to carry out a layer 1 processing in a communication layer in cooperation with the base band control portion 1.

<u>\<B. Operation of Device\></u>

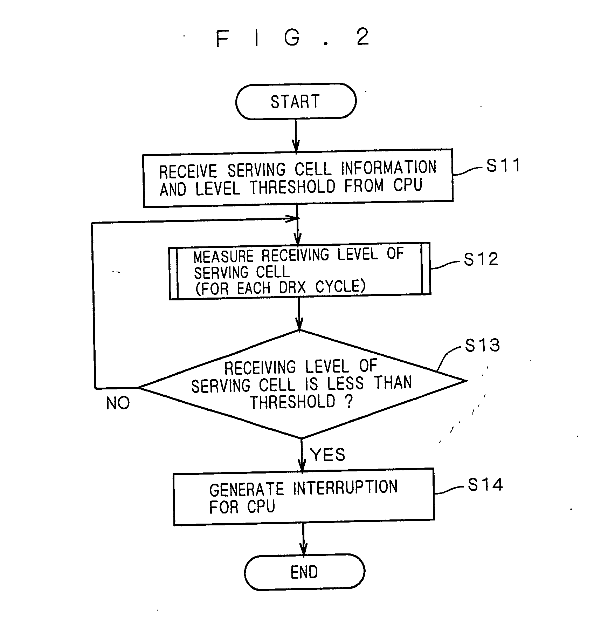

An operation of the mobile communication machine 100 will be described below with reference to Figs. 2 to 4. When the mobile communication machine 100 enters a waiting zone of a new serving cell, the CPU of the sequence control portion 4 reports information about the serving cell (a spreading code of each channel, a timing) to a DSP.

This operation is executed only once when the mobile communication machine 100 enters the waiting zone of the new serving cell. If the receiving level of the CPICH of the serving cell is equal to or more than a predetermined value, there is set a power saving mode in which the receiving level of the adjacent cells is stopped to be monitored by the CPU and only the receiving level of the serving cell is measured in a timing of a discontinuous receipt processing.

Fig. 2 is a flow chart showing an operation of the DSP of the base band control portion 1.

In Fig. 2, the DSP receives a threshold of a receiving level for starting the CPU by the serving cell information and an interruption from the CPU of the sequence control portion 4 (Step S11). Then, the CPU rejects a power supply for itself and is brought into a sleeping state and the mobile communication machine 100 is set into the power saving mode.

The mobile communication machine 100 receives PICH and CPICH of a base station in a DRX cycle (a discontinuous receive cycle) in a waiting state in which a power supply is ON and talking is not carried out. The DSP starts to measure a receiving level of the CPICH of a serving cell for each DRX cycle (Step S12).

The procedure for measuring the receiving level of the CPICH in the Step S12 will be described below.

The DSP first measures the RSSI of a received wave by using the hardware of the radio portion TRX and the base band portion 10. Next, the received wave is de-spread to measure the RSCP (a received signal code power) by using a scrambling code and timing information given from the CPU. Moreover, Ec / Io (a ratio of a desired wave power to a total received power) is calculated based on the RSSI and RSCP thus measured.

As shown in Step S13, then, the acquired receiving level (one of values of the RSSI, the RSCP and the Ec / Io) is compared with a threshold (a Sintrasearch threshold) set based on the 3GPP standards given from the CPU. If the receiving level is equal to or more than the threshold, it is decided that the receiving level is excellent and the CPU is not started (does not carry out an interruption), and an operation is stopped until the DRX cycle passes again.

Information broadcasted from the base station (control information which is always transmitted from the base station) includes the instructions which the mobile communication machine 100 should measure as the receiving level, the RSSI, the RSCP or the Ec/Io. The mobile communication machine 100 receives PCCPCH (Primary Common Control Physical CHannel) together during the (discontinuous) receipt of the PICH so that the information broadcasted included therein is obtained.

On the other hand, if the receiving level is less than the threshold, it is decided that the receiving level is reduced so that the DSP generates an interruption for the CPU (Step S14). When the interruption is generated, the power saving mode ends.

The DSP is constituted by firmware. Therefore, it is easy to constitute the DSP to decide quality of the receiving level.

Fig. 2 is a flow chart showing the operation of the CPU of the sequence control portion 4 in the case in which the power saving mode is started.

In the power saving mode, the CPU sets a threshold of a receiving level for starting the CPU by the serving cell information and the interruption and gives the threshold to the DSP of the base band control portion 1 as described above (Step S21).

Then, the CPU rejects the power supply for itself and is brought into a sleeping state (Step S22). The CPU is brought into the sleeping state so that the sequence control portion 4 is also brought into the sleeping state.

When the CPU is interrupted through the processing of the DSP of the base band control portion 1 described with reference to Fig. 2, the sleeping state of the CPU is also released so that the sleeping state of the sequence control portion 4 is also released (Step S23).

The started CPU compares the receiving levels of the RSSI, the RSCP or the Ec / Io which are measured by the DSP of the base band control portion 1 with the threshold (Sintrasearch threshold) set based on the 3GPP standards as shown in Step S24. If the receiving level is equal to or more than the threshold, it is decided that the receiving level is excellent. Then, the routine returns to the Step S21 to update the threshold of the receiving level for starting the CPU. Consequently, the threshold thus updated is given to the DSP of the base band control portion 1 together with the serving cell information so that the sleeping state (Step S22) is brought.

While it has been expressed that the threshold of the receiving level is updated, the update includes the case in which a new value is given and the case in which the same value as a last value is given. Thus, it is possible to accurately decide the quality of the receiving level by updating the threshold of the receiving level.

On the other hand, if the receiving level is less than the threshold in the Step S24, it is confirmed that the receiving level is reduced. Consequently, a receiving level measuring operation of adjacent cells (an adjacent-cells monitoring) is started by using the base band control portion 1 and the radio portion TRX (Step S25).

In order to confirm a result of the decision in the DSP, the quality of the receiving level of the serving cell is decided again in the Step S24. Thus, the quality of the receiving level is also decided in the CPU of the sequence control portion 1. Therefore, precision in the decision of the quality of the receiving level can be enhanced.

The measurement of the receiving level of the adjacent cells is basically identical to the measurement of the receiving level of the serving cell. In the case of the adjacent cells, the CPICH is not received periodically. Therefore, the CPICH is received and the RSSI, the RSCP and the Ec / Io are measured for only a period of approximately 10 msec, for example, when the measurement is required.

Moreover, the necessity for measuring the receiving level of the adjacent cells suggests that the mobile communication machine 100 enters the waiting zone of a new serving cell or is entering the same waiting zone. In such a case, the waiting zone transition is carried out to open PICH of the new serving cell. If the receiving level of the CPICH of the serving cell is equal to or more than a predetermined value, the operation for monitoring the receiving level of the adjacent cells by the CPU is stopped , thereby starting the power saving mode for measuring only the receiving level of the serving cell in a timing of a discontinuous receipt processing.

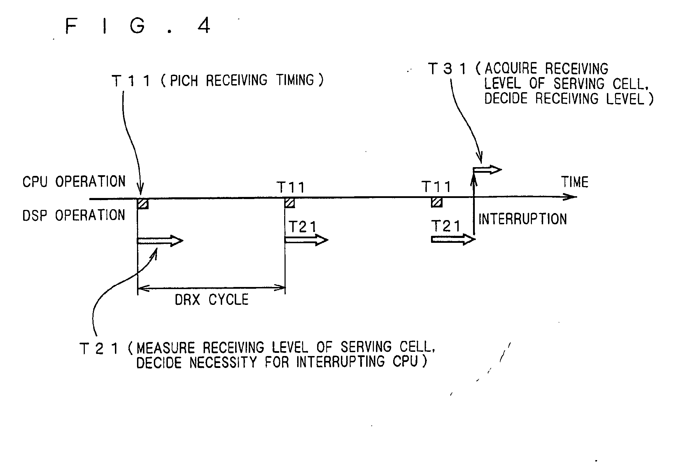

Fig. 4 is an image diagram showing a series of operations described above. As shown in Fig. 4, there comes a timing in which the DSP of the base band control portion 1 receives the PICH of the serving cell for each DRX cycle. The receiving period is represented by T11. The DSP also receives the CPICH at the same time and measures the receiving level as described above, and decides the necessity for interrupting the CPU based on the threshold which is previously given from the CPU of the sequence control portion 4. A period of time required for the foregoing series of operations is represented by T21.

The above operation is repeated every DRX cycle. The CPU is not operated but is maintained in the sleeping state until the interruption is generated.

When the interruption is given from the DSP to the CPU, the CPU is started to decide the necessity of the adjacent-cells monitoring based on the receiving level of the serving cell. If necessary, the adjacent-cells monitoring is carried out. The operation period (starting period) of the CPU is represented by T31.

<u><C. Function and Effect></u>

As described above, according to the communication control method in accordance with the embodiment of the present invention, the measurement of the receiving level of the CPICH of the serving cell and the decision of the quality of the receiving level are discontinuously carried out by the DSP of the base band control portion 1 in the waiting state. Only in the case in which the receiving level is reduced, the CPU is started. Therefore, the number of starting operations of the CPU is decreased. Consequently, it is possible to obtain a mobile communication machine in which power consumption is more reduced than a conventional discontinuous receipt processing.

While the invention has been shown and described in detail, the foregoing description is in all aspects illustrative and not restrictive. It is therefore understood that numerous modifications and variations can be devised without departing from the scope of the invention.

**Claims**

1. A method of controlling a communication of a mobile communication machine (100) comprising a sequence control portion (4) and a base band control portion (1),
   wherein the mobile communication machine (100) carries out a discontinuous receipt processing (DRX) for discontinuously confirming a call to a self-machine in a waiting state in which a power supply is ON and a communication is not performed,
   the discontinuous receipt processing comprising the following steps:

(a) measuring a receiving level of a common pilot channel (CPICH) transmitted by a serving cell in the base band control portion (1) and deciding the quality of the receiving level based on a predetermined threshold; and
(b) starting the sequence control portion (4) to carry out a predetermined operation only when it has been decided that the receiving level is insufficient in the step (a).

2. The method according to claim 1,
   wherein the step (a) comprises the following steps:

   (a-1) measuring a received signal strength (RSSI) of the common pilot channel (CPICH);
   (a-2) de-spreading the common pilot channel (CPICH) to obtain a received signal code power (RSCP);
   (a-3) subtracting the received signal strength (RSSI) from the received signal code power (RSCP), thereby obtaining a ratio (Ec/Io) of a received power of a desired wave to a total received power; and
   (a-4) deciding that the receiving level is insufficient if one of the values of the received signal strength (RSSI), the received signal code power (RSCP) and the ratio (Ec/Io) of the received power of the desired wave to the total received power is smaller than the predetermined threshold, and

   wherein the step (b) comprises the following step:

   (b-1) carrying out an interruption processing from the base band control portion (1) to the sequence control portion (4) if it has been decided that the receiving level is insufficient, thereby starting the sequence control portion (4).

3. The method according to claim 2,
   wherein the steps (a-1) to (a-4) are executed by a digital signal processor (DSP) of the base band control portion (1),
   wherein the step (b-1) includes the step of starting a processing unit (CPU) set in a sleeping state in the sequence control portion (4) by generation of the interruption processing, and
   wherein the step (b) further includes the step (b-2) of controlling a measurement of a receiving level of adjacent cells only when a predetermined condition is met, as the predetermined operation of the processing unit (CPU) of the sequence control portion (4).

4. The method according to claim 3,
   further comprising the step of giving the predetermined threshold to the digital signal processor (DSP) of the base band control portion (1) from the processing unit (CPU) of the sequence control portion (4) prior to the step (a), wherein the step (b-2) includes the following steps:

   (b-2-1) causing the processing unit (CPU) of the sequence control portion (4) to acquire data on the received signal strength (RSSI), the received signal code power (RSCP) and the ratio (Ec/Io) of the received power of the desired wave to the total received power from the digital signal processor (DSP) and to confirm that the receiving level is insufficient if one of the
   values of the data is smaller than the predetermined threshold; (b-2-2) causing the processing unit (CPU) of the sequence control portion (4) to control a receiving level measuring operation of the adjacent cells to acquire a receiving level of the adjacent cells if it has been confirmed that the receiving level is insufficient; and
   (b-2-3) updating the predetermined threshold and giving the threshold thus updated to the digital signal processor (DSP) and then setting the sleeping state if it has been confirmed that the receiving level is sufficient in the step (b-2-1).

5. A method of controlling a communication of a mobile communication machine (100) comprising a sequence control portion (4) and a base band control portion (1),
   wherein the mobile communication machine (100) serves to carry out a receiving level quality decision processing in a discontinuous receiving state (DRX) for discontinuously confirming a call to a self-machine,
   the quality decision processing comprising:

   - a first step of causing the sequence control portion (4) to set a predetermined threshold related to the receiving level and stopping an operation by itself;
   - a second step of causing the base band control portion (1) to measure the receiving level and deciding the quality of the receiving level thus measured based on the predetermined threshold; and
   - a third step of causing the sequence control portion (4) to be operated, thereby deciding the quality of the receiving level only when it has been decided that the receiving level is insufficient in the second step.

**6.** The method according to claim 5,
further comprising a fourth step of causing the sequence control portion (4) to update the predetermined threshold if it has been decided that the receiving level is sufficient in the third step.

**7.** A mobile communication machine employing the communication control method according to any of claims 1 to 6.

FIG. 1

F I G . 2

```
                  ┌─────────────┐
                  │    START    │
                  └─────────────┘
                         │
                         ▼
        ┌───────────────────────────────────┐
        │ RECEIVE SERVING CELL INFORMATION  │──── S11
        │ AND LEVEL THRESHOLD FROM CPU      │
        └───────────────────────────────────┘
                         │
                         ▼
          ┌─────────────────────────────┐
          │ MEASURE RECEIVING LEVEL OF  │──── S12
          │ SERVING CELL                │
          │ (FOR EACH DRX CYCLE)        │
          └─────────────────────────────┘
                         │
                         ▼
                ◇─────────────────◇
        NO      │ RECEIVING LEVEL OF │──── S13
      ◄─────────│ SERVING CELL IS LESS THAN │
                │     THRESHOLD ?    │
                ◇─────────────────◇
                         │ YES
                         ▼
          ┌─────────────────────────────┐
          │ GENERATE INTERRUPTION       │──── S14
          │ FOR CPU                     │
          └─────────────────────────────┘
                         │
                         ▼
                  ┌─────────────┐
                  │     END     │
                  └─────────────┘
```

F I G . 3

```
              ┌─────────────┐
              │    START    │
              └─────────────┘
                     │
    ┌───────────────▶│
    │         ┌───────────────────────────┐
    │         │ SET SERVING CELL INFORMATION │── S21
    │         │ AND LEVEL THRESHOLD TO DSP   │
    │         └───────────────────────────┘
    │                │
    │         ┌───────────────────────────┐
    │         │      SLEEPING STATE       │── S22
    │         └───────────────────────────┘
    │                │         ◀───────────── INTERRUPTION
    │         ┌───────────────────────────┐
    │         │  RELEASE SLEEPING STATE   │── S23
    │         └───────────────────────────┘
    │                │
    │              ╱   ╲
    │            ╱       ╲        S24
    │          ╱  RECEIVING ╲
    │  NO    ╱   LEVEL OF      ╲
    └───────◀  SERVING CELL IS   ▶
            ╲  LESS THAN        ╱
             ╲  THRESHOLD ?   ╱
               ╲            ╱
                 ╲        ╱
                    │ YES
            ┌───────────────────────────────┐
            │ PROCEED TO MEASUREMENT OF RECEIVING │── S25
            │ LEVEL OF ADJACENT CELLS            │
            └───────────────────────────────┘
                     │
              ┌─────────────┐
              │     END     │
              └─────────────┘
```

F I G . 4

T 1 1 (PICH RECEIVING TIMING )

T 3 1 (ACQUIRE RECEIVING
LEVEL OF SERVING CELL,
DECIDE RECEIVING LEVEL )

CPU OPERATION

T11

T11

TIME

DSP OPERATION

T21

T21

INTERRUPTION

DRX CYCLE

T 2 1 (MEASURE RECEIVING LEVEL OF SERVING CELL,
DECIDE NECESSITY FOR INTERRUPTING CPU )

12

## F I G . 5 (B A C K G R O U N D   A R T)

```
                    ┌─────────────┐
                    │   START     │
                    └──────┬──────┘
                           │
        ┌──────────────────▼──────────────────┐
        │  START DSP (FOR DRX CYCLE)          │  ─┐
  S1────│  AND RECEIVE PICH AND CPICH         │   │
        └──────────────────┬──────────────────┘   │
                           │                       │
        ┌──────────────────▼──────────────────┐   │
        │  CONFIRM PAGING INDICATION AND      │   ├─ DSP PROCESSING
  S2────│  MEASURE RECEIVING LEVEL OF         │   │
        │  CPICH                              │   │
        └──────────────────┬──────────────────┘   │
                           │                       │
        ┌──────────────────▼──────────────────┐   │
  S3────│  GENERATE INTERRUPTION FOR CPU      │  ─┘
        └──────────────────┬──────────────────┘
                           │
        ┌──────────────────▼──────────────────┐  ─┐
  S4────│  START CPU AND ACQUIRE              │   │
        │  RECEIVING LEVEL OF CPICH           │   │
        └──────────────────┬──────────────────┘   │
                           │                       │
                  ╱────────▼────────╲              │
      S5─────────╱  RECEIVING LEVEL OF ╲           │
            ┌───╱  SERVING CELL IS EQUAL TO OR ╲───┼─ CPU PROCESSING
         YES│   ╲  MORE THAN THRESHOLD ?     ╱    │
            │    ╲────────┬────────╱              │
            │             │ NO                    │
            │   ┌─────────▼─────────────────┐     │
            │   │ PROCEED TO MEASUREMENT OF │     │
         S6─┼───│ RECEIVING LEVEL OF ADJACENT CELLS │  ─┘
            │   └─────────┬─────────────────┘
            │             │
            │      ┌──────▼──────┐
            │      │    END      │
            │      └─────────────┘
```

EP 1 337 048 A2

# F I G . 6 （BACKGROUND ART）

T 1 （PICH RECEIVING TIMING）

T 3 （ACQUIRE RECEIVING LEVEL OF
SERVING CELL, DECIDE RECEIVING LEVEL）

T 2 （MEASURE RECEIVING LEVEL OF SERVING CELL,
GENERATE INTERRUPTION INTO CPU）

14